Europäisches Patentamt

European Patent Office

Office européen des brevets

(11) Publication number: **0 083 437**
**B1**

# EUROPEAN PATENT SPECIFICATION

(45) Date of publication of patent specification: **19.04.89**

(51) Int. Cl.⁴: **A 01 N 25/04**

(21) Application number: **82111832.0**

(22) Date of filing: **20.12.82**

(54) Stable oil-in-water dispersions.

(30) Priority: **24.12.81 US 334187**

(43) Date of publication of application:
**13.07.83 Bulletin 83/28**

(45) Publication of the grant of the patent:
**19.04.89 Bulletin 89/16**

(84) Designated Contracting States:
**AT BE CH DE GB IT LI NL**

(56) References cited:
**DE-A-2 820 389**
**GB-A-2 025 770**
**US-A-4 174 960**

**CHEMICAL ABSTRACTS, vol. 69, no. 4, 22nd July 1968, page 1064, no. 11057z, Columbus, Ohio, USA A.E.AKOPYAN et al.: "Freezing resistance of aqueous poly (vinyl acetate) dispersions".**

**The file contains technical information submitted after the application was filed and not included in this specification**

(73) Proprietor: **SANDOZ AG**
**Lichtstrasse 35**
**CH-4002 Basel (CH)**
(84) **BE CH GB IT LI NL**

(73) Proprietor: **SANDOZ-PATENT-GMBH**
**Humboldtstrasse 3**
**D-7850 Lörrach (DE)**
(84) **DE**

(73) Proprietor: **SANDOZ-ERFINDUNGEN**
**Verwaltungsgesellschaft m.b.H.**
**Brunner Strasse 59**
**A-1235 Wien (AT)**
(84) **AT**

(72) Inventor: **Curtis, Ralston**
**679 University Avenue**
**Los Altos California 94022 (US)**
Inventor: **Brownell, Howard R.**
**1098 Lynn Avenue**
**Sunnyvale California 94087 (US)**
Inventor: **Papanu, Steven C.**
**883 Lundy Lane**
**Los Altos California 94022 (US)**

Courier Press, Leamington Spa, England.

EP 0 083 437 B1

# EP 0 083 437 B1

**Description**

## Background of the invention
### Field of the invention

This invention relates to novel pesticidal oil-in-water dispersions which are freeze-thaw stable and 50°C storage stable and which are easily dispersed in water, and to the use of said dispersions for the control of pests.

### Description of the prior art

United States Patent No. 4,283,415 discloses oil-in-water pesticidal emulsions having emulsified particles from 1 to 200 μm in size, polyvinyl alcohol or gum arabic, and a thickener. Suspension stability is achieved only in a viscous mixture containing a thickener. In general, oil-in-water pesticidal emulsions containing surfactants and organic thickeners such as carboxymethylcellulose and vegetable gums are well known.

The limitations of the prior art oil-in-water dispersions are their lack of particle size stability during 50°C storage as well as their general lack of stability during severe freeze-thaw cycles.

### Summary of the invention

The pesticidal oil-in-water concentrates of this invention are stable, aqueous dispersions having freeze-thaw stability, 50°C storage stability, and easy dispersibility when diluted with water. In summary, the composition of this invention is a stable pesticidal oil-in-water dispersion consisting essentially of

a) from 1 to 50% by weight of a water-insoluble oily pesticide dispersed as particles having an average size of less than one micron;

b) from 5.5 to 20% by weight of polyvinyl alcohol having a molecular weight of from 2000 to 125,000 and having from 11 to 28% of its hydroxy groups present as the acetate ester;

c) from 0.1 to 8% by weight of a surfactant;

d) from 5 to 30% by weight of a salt selected from calcium chloride, calcium nitrate magnesium chloride, magnesium nitrate, potassium bromide, potassium iodide, sodium nitrate and mixtures thereof;

e) the balance being water;

the dispersion being freeze-thaw stable and 50°C storage stable.

Oily water-insoluble pesticides which are to be dispersed in water for general purposes present severe mixing problems. It is a general object of this invention to provide a composition wherein the oily pesticidally active compounds are dispersed in an oil-in-water emulsion concentrate so that they can be handled with convenience and practicality to formulate more dilute dispersions.

The conventionally used type of liquid pesticidal formulation, an emulsifiable concentrate (EC), contains as its major ingredient a large amount of organic solvent. Drawbacks of this formulation, due to the organic solvent therein, include phytotoxicity to plants, eye and skin irritation to animals and humans and flammability. The EC formulation is also very sensitive to extremes in water temperature and water hardness.

For these reasons, aqueous, organic solvent-free formulations such as the oil-in-water dispersions of this invention provide a major advance. In the pesticidal compositions of this invention, the pesticidal activity is equivalent to or exceeds that of a conventional EC formulation. It is stable even at extremes of environmental temperatures, and it is easy and convenient to use. Furthermore, it is much less irritating to skin and eyes, non-flammable and shows no phytotoxicity.

The dispersions of this invention can be diluted in water without difficulty in temperature extremes and in water having up to 20,000 ppm hardness. To do this is very difficult or impossible with an EC formulation. A further advantage of the dispersions of this invention is the ease of its dispersion when it is diluted with water, for example in a tank sprayer.

## Detailed description of the invention

The oil-in-water pesticidal dispersions of this invention can include, as the oily pesticidally active component, particularly water-insoluble oily compound having a solubility in water of less than one weight percent and a viscosity of at least one mPa · s (cps) at 25°C (measured by a Brookfield® LV using a No. 1 spindle at 60 rpm). It is with thicker oils that the emulsion concentrates of this invention offer the greatest advantages.

Pesticidally active components include insecticides, herbicides, plant growth regulators and fungicides. Insecticides include, for example, malathion, fentrothion, dimethoate, fluvalinate, permethrin, cypermethrin, fenvalerate, deltamethrin and fenpropathrin. Herbicides include, for example, trifluralin, alachlor, bensulide, butylate and diclofop-methyl.

A particularly advantageous composition of this invention is obtained when the pesticidally active compound in the composition is α-cyano-3-phenoxybenzyl 2-(2-chloro-4-trifluoromethylphenylamino)-3-methylbutanoate. This compound can be obtained as a racemic mixture of four diasteriomers or the individual diasteriomers. Of most particular value are oil-in-emulsion concentrates wherein the oily component is the half-resolved (S,R) - α - cyano - 3 - phenoxybenzyl (R) - 2 - (2 - chloro - 4 - trifluoromethylphenylamino)-3-methylbutanoate described in United States Patent Number 4,260,633.

2

These compounds are normally present as a thick viscous oil, and after some prolonged storage of the diasteriomer mixtures, crystal growth may occur within the dispersed particles. Dispersions of such partially crystallized components are included within the term "oil-in-water dispersion" as used herein. Dispersions of water-insoluble low melting solids which are solid at room temperature but are viscous oils when heated can be dispersed in the aqueous medium in the heated, liquid state to form a dispersion of particles having a size of less than one μm (micron). After cooling, the initially oily liquid particles solidify, yielding a dispersion of solid particles. Such dispersions are also included within the term "pesticidal oil-in-water dispersion" as used herein, and such compounds are included within the term "oily pesticidally active compound" as used herein.

In the oil-in-water pesticidal dispersions of this invention, the oily pesticidally active compound is dispersed in particles having an average size of less than one μm (micron). Minimum growth in particle size during freeze-thaw cycling and prolonged 50°C storage is critical. The concentration of the oily component is from 20 to 30 weight percent in the oil-in-water dispersion concentrate of this invention.

The composition of this invention contains from 5.5 to 20 weight percent and preferably from 5.5 to 8.5 weight percent polyvinyl alcohol. Polyvinyl alcohol suitable for use in the composition of this invention has a molecular weight of from 2000 to 125,000 and is about 72 to 89 mole percent hydrolyzed, that is, has from 11 to 28 percent of its hydroxy groups present in the acetate ester form. One such alcohol is Gelvatol® 20/90 (Monsanto), which is 88.7 to 85.5 mole percent hydrolyzed and has an average molecular weight of 125,000. Another is Gelvatol 40/10, which is 77 to 72.9 mole percent hydrolyzed and has an average molecular weight of 2000 or over. A third is Gelvatol 20/30, which is 89 to 87.7 mole percent hydrolyzed and has an average molecular weight of about 10,000. In contrast, a completely hydrolyzed polyvinyl alcohol, such as Elvanol® (DuPont, the product comprising less than one percent residual polyvinyl acetate), causes failure of the mixture to emulsify.

The composition of this invention contains from 0.1 to 8 weight percent surfactant. The surfactants suitable for use in the composition of this invention include anionic, cationic, non-ionic and amphoteric surfactants and compatible mixtures thereof. Surfactants suitable for use in the formulation of the present invention are, for example, blended surfactants which are designed by the manufacturer specifically for use in emulsifiable concentrates of synthetic organic pesticides. These surfactants are believed to be blends of common anionic and non-ionic surfactants with the most functionally significant component being alkali or alkaline earth alkaryl sulfonate, such as calcium dodecylbenzene sulfonate. Their use in this invention is a novel application not intended by the manufacturer. Such a surfactant may be chosen from, for example, Toximul® D (Stepan Chemical); Triton® AG-180, AG-190 or AG-193 (Rohm & Haas); the Atlox® series (Imperial Chemical Industries); and the Sponto® series (Witco).

Another class of surfactants suitable for use in the formulation of the present invention is sodium naphthalene formaldehyde condensates. Examples of such surfactants are Petro® Dispersant 425 (Petro Chemicals Co., Inc.), Blancol® N (GAF) and Tamol® N (Rohm &Haas). Non-ionic surfactants suitable for use in the composition of this invention include surfactants such as Triton CF-21 (Rohm & Haas), a modified ethoxylated non-ionic surfactant. Amphoteric surfactants such as Deriphat® BAW (Henkel), cocoamidobetaine and Lonzaine® 10S and 12C (Lonza, Inc.), decylbetaine and cocobetaine can be used in the composition of this invention. Examples of suitable cationic surfactants include Ethomeen® C-15 and T-15 (Industrial Chemical Division of Armac, Inc.), tertiary amine-ethylene oxide condensation products of primary fatty amines, tallow amines and cocoamines.

The preferred surfactant are the anionic surfactants.

The composition of this invention also contains from 5 to 30 percent by weight of a salt selected from calcium chloride, calcium nitrate, magnesium chloride, magnesium nitrate, potassium bromide, potassium iodide, sodium nitrate or mixtures thereof. Polyvinyl alcohol solubility may be reduced at the highest salt concentrations. The optional salt concentration is from 10 to 20 percent by weight. In view of the well-known properties of inorganic salts to cause flocculation and precipitation of dispersed phases, it is unexpected that stability can be achieved in the presence of substantial quantities of these salts. It is even more surprising, with these specific inorganic salts, that not only is the freeze-thaw stability greatly increased but stability on prolonged storage at 50°C is also greatly increased. Prior to this invention, particle size growth of oily particles in aqueous dispersions could not be easily retarded during prolonged 50°C storage.

The balance of the composition of this invention is water.

The dispersions of the present invention can be prepared by dispersing liquid particles of the water-insoluble oil by mechanical means, with or without a surfactant, in an aqueous mixture of polyvinyl alcohol, water and the inorganic salt. Thus, the active ingredient is first premixed until uniform with a surfactant. This mixture is added to the aqueous mixture in a conventional stirrer such as a Waring® blender, a Sorvall Omni-Mixer® or a Kraft® apparatus non-aerating stirrer, usually at a high speed and with heating to a temperature of from 60 to 70°C. In the stirrer, the liquid particles of the active ingredient are dispersed in the aqueous phase. Stirring with heating is continued for about 10 to 20 minutes, that is, until the particle size average is less than one μm (micron) and all individual particles are less than 2 and preferably less than one μm (micron) in diameter.

Prior to this invention, pesticidal dispersions have required thickeners to maintain stability. In the compositions of the present invention, a thickener is not needed for stability. The elimination of the thickener not only saves in cost of material and processing steps, but it provides a more pourable formulation.

The term "freeze-thaw stable", as used herein with reference to oil-in-water dispersions is defined to mean the respective dispersion has passed the Freeze-Thaw Cycle Test. This test is as follows:

Freeze-thaw cycle test

1) A 5 to 10 ml sample of dispersion is placed in a 10 ml screw-top glass vial and capped.

2) The vial is placed in a freezing compartment for 16 hours at 15°C. It is then removed and allowed to sit at 24°C for 8 hours.

3) Repeat Step 2 twice more (to give a total of 3 cycles).

4) Examine the dispersion. The sample must show no visual signs of oiling (separation of the oil component) or solidification. The sample should move and flow as freely with minimal hand stirring as it did before the test. Unless all of these requirements are satisfied, the dispersion is not freeze-thaw stable.

The term "50°C storage stable", as used herein with reference to oil-in-water dispersions, is defined to mean the respective dispersion has passed the 50°C Storage Test. This test is as follows:

1) A 50 g sample of the dispersion is stored at 50°C in a capped glass vial or other sealed container.

2) The particle size of this sample is checked at the end of a 30 day period.

a) In this procedure, the sample is shaken, and one drop (from a pipette) is added to 5 ml of deionized water and shaken until homogeneous.

b) Two drops of this dispersed sample are placed on a microscope slide and covered with a cover glass.

c) Examine slide with a microscope using an oil-immersion lens under 1000× magnification.

d) Count the number of particles having a diameter greater than 3 $\mu$m in an 18 mm$^2$ viewing area. If not more than 10 particles are observed having diameters greater than 5 microns, the test is passed.

The formulations of the present invention are concentrates. Before normal use, these concentrates are diluted with water to a concentration providing from 0.01 to 0.1 weight percent of the active ingredient. Therefore, the ability of the composition to disperse easily in water is critical. For example, $\alpha$ - cyano - 3 - phenoxybenzyl 2 - (2 - chloro - 4 - trifluoromethylphenylamino) - 3 - methylbutanoate is a highly active pesticide, particularly against insects and acarids.

Among the pests against which the compound is pesticidally effective are insets of the order Lepidoptera, Orthoptera, Heteroptera, Homoptera, Diptera, Coleoptera or Hymenoptera, and acarids of the order Acarina, including mites of the family Tetranychidae or Tarsonemidae and ticks such as Ornithodoros. In the use of the formulation of the present invention for combating insects and acarids, the formulation containing pesticide is applied to the locus in a pesticidally effective amount.

The following examples are provided to illustrate the practice of the present invention. Temperature is given in degrees Celsius. Percentages are given as percent by weight. The examples set forth below are procedures which have been actually carried out unless stated to the contrary.

Example 1

23 g of $\alpha$-cyano-3-phenoxybenzyl 2-(2-chloro-4-trifluoromethylphenylamino)-3-methylbutanoate, 1.0 g of Deriphat® BAW, 22.4 g of deionized water and 5.6 g of Gelvatol® 20/30 were mixed for 7 minutes at top speed on a Waring® Blender, model 8590 (25 ml to 250 ml capacity). A cooling jacket prevented the temperature from rising above 50°C. 20 g of anhydrous calcium chloride dissolved in 28 g of deionized water was then added and mixed at top speed for 5 minutes.

Microscopic examination confirmed that all of the particles were submicron. The dispersion was subjected to the Freeze-Thaw Stability Test and 50°C Storage Stability Test and found to have passed both.

Example 2

11.2 g of $\alpha$-cyano-3-phenoxybenzyl 2-(2-chloro-4-trifluoromethylphenylamino)-3-methylbutanoate, 0.5 g of Deriphat® BAW, 14.2 g of deionized water and 2.8 g of Gelvatol® 20/30 were mixed for 7 minutes with a Waring® Blender. The temperature did not rise above 50°C. 8.7 g of anhydrous calcium chloride dissolved in 12.6 g of deionized water were then added and mixed at top speed for 5 minutes.

The resulting oil phase particles of the oil-in-water flowable emulsion were mostly submicron in diameter with a few one $\mu$m (micron) particles as determined by microscopic examination. The emulsion also passed the Freeze-Thaw Stability and 50°C Storage Stability Tests.

Example 3

11.2 g of technical cypermethrin, 0.4 g of Deriphat® BAW, 11.2 g of Gelvatol® 20/30 and 4.0 g of deionized water were mixed for 7 minutes with a Waring® blender. 6.0 g of anhydrous calcium chloride dissolved in 7.2 g of deionized water was then added and mixed at top speed for 5 minutes.

The particle size was one $\mu$m and less, and the emulsion passed the Freeze-Thaw Test.

Fluvalinate is the common name for $\alpha$ - cyano - 3 - phenoxybenzyl 2 - (2 - chloro - 4 - trifluoromethylphenylamino) - 3 - methylbutanoate. Permethrin is 3 - phenoxybenzyl (1RS) - cis, trans - 3 - (2,2 - dichlorovinyl) - 2,2 - dimethylcyclopropanecarboxylate. Cypermethrin is (RS) - $\alpha$ - cyano - 3 - phenoxybenzyl (1RS) - cis, trans - 3 - (2,2 - dichlorovinyl) - 2,2 - dimethylcyclopropanecarboxylate.

EP 0 083 437 B1

Deltamethrin is (S) - α - cyano - 3 - phenoxybenzyl (1R) - cis - 3 - (2,2 - dibromovinyl) - 2,2 - dimethylcyclopropanecarboxylate. Fenpropathrin is α - cyano - 3 - phenoxybenzyl 2,2,3,3 - tetramethyl-cyclopropanecarboxylate. Fenvalerate is α - cyano - 3 - phenoxybenzyl 2 - (4 - chlorophenyl) - 3 - methylbutanoate.

Example 4

Using an uncooled Waring® Blender, Model 8580, trifluralin technical (23 g) was dispersed into a mixture of Gelvatol® 23/30 (5.8 g), water (22.2 g) and Deriphat® BAW (1 g) using high speed mixing. The temperature was allowed to rise naturally from mixing friction to 40—50° to insure melting of the trifluralin. In total, three one-minute cycles of mixing with alternate cooling to 20—25° reduced the particle size to less than 1 μm. Then, CaCl₂ (20 g) and water (28 g) were added and mixed at high speed for two minutes. Physical tests showed excellent freeze-thaw stability and no effects from storage.

**Claims**

1. A stable pesticidal oil-in-water dispersion consisting essentially of:
(a) from 20 to 30% by weight of a water-insoluble oily pesticidally active compound dispersed as particles having an average size of less than one micron;
(b) from 5.5 to 20% by weight of polyvinyl alcohol having a molecular weight of from 2000 to 125,000 and having from 11 to 28% of its hydroxy groups present as the acetate ester;
(c) from 0.1 to 8% by weight of a surfactant;
(d) from 5 to 30% by weight of a salt selected from calcium chloride, calcium nitrate, magnesium chloride, magnesium nitrate, potassium bromide, potassium iodide, sodium nitrate and mixtures thereof;
(e) the balance being water;
the dispersion being freeze-thaw stable and 50°C storage stable.
2. The composition of Claim 1 wherein the salt concentration is from 10 to 20% by weight.
3. The composition of Claims 1 or 2 wherein the pesticidally active compound is an insecticide or acaricide.
4. The composition of Claim 3 wherein the water-insoluble oily compound is a synthetic pyrethroid, preferably (S,R) - α - cyano - 3 - phenoxybenzyl (R) - 2 - (2 - chloro - 4 - trifluoromethylphenylamino) - 3 - methylbutanoate.
5. A composition comprising the oil-in-water dispersion according to any of the preceding claims diluted with sufficient water to provide a concentration of from· 0.01 to 0.1 weight percent active oily compound.
6. A method for combating pests and weeds, especially insects and acarids which comprises applying the composition according to any of claims 1 to 5 to the locus in a pesticidally or herbicidally effective amount.

**Patentansprüche**

1. Stabile pestizide Öl-in-Wasser Dispersion, dadurch gekennzeichnet, daß sie im wesentlichen besteht aus
a) 20 bis 30 Gewichtsprozent eines in Wasser unlöslichen öligen Pestizids, das in Form von Teilchen mit einer mittleren Größe von weniger als 1 Micron dispergiert ist,
b) 5,5 bis 20 Gewichtsprozent eines Polyvinylalkohols mit einem Molekulargewicht von 2000 bis 125 000, bei welchem 11 bis 28% der Hydroxylgruppen als Acetatester vorliegen,
c) 0,1 bis 8 Gewichtsprozent eines oberflächenaktiven Mittels,
d) 5 bis 30 Gewichtsprozent eines Salzes, das ausgewählt ist aus Calciumchlorid, Calciumnitrat, Magnesiumchlorid, Magnesiumnitrat, Kaliumbromid, Kaliumiodid, Natriumnitrat und Gemischen hiervon, und
e) Wasser als Rest,
und daß diese Dispersion über eine Einfrier-Auftau-Stabilität und eine Lagerstabilität bei 50°C verfügt.
2. Zusammensetzung nach Anspruch 1, dadurch gekennzeichnet, daß die Salzkonzentration 10 bis 20 Gewichtsprozent beträgt.
3. Zusammensetzung nach Anspruch 1 oder 2, dadurch gekennzeichnet, daß die pestizid wirksame Verbindung ein Insektizid oder Acaricid ist.
4. Zusammensetzung nach Anspruch 3, dadurch gekennzeichnet, daß die in Wasser unlösliche ölige Verbindung ein synthetisches Pyrethroid und vorzugsweise (S,R) - α - Cyano - 3 - phenoxybenzyl - (R) - 2 - (2 - chlor - 4 - trifluormethylphenylamino) - 3 - methylbutanoat ist.
5. Zusammensetzung aus der Öl-in-Wasser Dispersion nach irgend einem der vorhergehenden Ansprüche, dadurch gekennzeichnet, daß sie mit Wasser auf eine Konzentration von 0,01 bis 0,1 Gewichtsprozent wirksamer öliger Verbindung verdünnt ist.
6. Verfahren zur Bekämpfung von Schädlingen und Unkräutern, insbesondere von Insekten und Acariden, dadurch gekennzeichnet, daß die Zusammensetzung nach irgend einem der Ansprüche 1 bis 5 in einer pestizid oder herbizid wirksamen Menge auf den jeweiligen Standort angewandt wird.

## EP 0 083 437 B1

**Revendications**

1. Une dispersion pesticide stable du type huile-dans-l'eau constituée essentiellement:
   a) de 20 à 30% en poids d'un composé huileux insoluble dans l'eau actif du point de vue pesticide, sous forme de particules ayant une dimension moyenne inférieure à un micron;
   b) de 5,5 à 20% en poids d'alcool polyvinylique ayant un poids moléculaire de 2.000 à 125.000 et ayant de 11 à 28% de ses groupes hydroxy présents sous forme d'acétate;
   c) de 0,1 à 8% en poids d'un agent tensio-actif;
   d) de 5 à 30% en poids d'un sel choisi parmi le chlorure de calcium, le nitrate de calcium, le chlorure de magnésium, le nitrate de magnésium, le bromure de potassium, l'iodure de potassium, le nitrate de sodium et les mélanges de ces composés;
   e) le complément étant de l'eau;
   la dispersion étant stable au gel-dégel et stable au stockage à 50°C.

2. La composition de la revendication 1 dans laquelle la concentration de sel est de 10 à 20% en poids.

3. La composition des revendications 1 à 2 dans laquelle le composé actif du point de vue pesticide est un insecticide ou un acaracide.

4. La composition de la revendication 3 dans laquelle le composé huileux insoluble dans l'eau est un pyréthroïde de synthèse, de préférence le (R) - 2 - (2 - chloro - 4 - trifluorométhylphénylamino) - 3 - méthylbutanoate de (S,R) - α - cyano - 3 - phénoxybenzyle.

5. Une composition comprenant la dispersion du type huile-dans-l'eau selon l'une quelconque des revendications précédentes diluée avec suffisamment d'eau pour fournir une concentration de 0,01 à 0,1% en poids de composé huileux actif.

6. Un procédé pour combattre les organismes nuisibles et les mauvaises herbes spécialement les insectes et les acariens, qui comprend l'application de la composition selon l'une quelconque des revendications 1 à 5 à un endroit en une quantité efficace du point de vue pesticide ou herbicide.